# EUROPEAN PATENT APPLICATION

(11) **EP 1 686 309 A1**
(43) Date of publication of application: **02.08.2006**
(21) Application number: 06001874.4
(22) Date of filing: 30.01.2006
(51) Int. Cl.: F21S 8/10, F21V 5/00, G02B 3/08

(54) **Vehicle lighting device and vehicle headlamp unit including the lighting device**

(30) Priority: 31.01.2005 JP 2005024521
(71) Applicant: ICHIKOH INDUSTRIES, LTD., Tokyo 144-0022 (JP)
(72) Inventor: Suzuki, Yasufumi, Isehara-shi Kanagawa-ken 259-1192 (JP); Okubo, Yasuhiro, Isehara-shi Kanagawa-ken 259-1192 (JP)
(74) Representative: Grünecker, Kinkeldey, Stockmair & Schwanhäusser Anwaltssozietät

(57) **Abstract**

A vehicle lighting device includes a semiconductor light source (1) constituted of a rectangular light emitter (5) and a lens (20) formed by integrating a plurality of divided basic lenses (20L,20R) with a joint lens (21L,20C,21R). The lens (20) emits a light from the light emitter (5) as a spot-type light distribution pattern extended in an arbitrary direction.

## Description

### CROSS-REFERENCE TO RELATED APPLICATIONS

The present document incorporates by reference the entire contents of Japanese priority document, 2005-024521 filed in Japan on January 31, 2005.

### BACKGROUND OF THE INVENTION

### 1. Field of the Invention

The present invention relates to a vehicle lighting device that includes a semiconductor light-emitting device such as an LED or EL (including organic EL) as a light source, to thereby emit a spot-type light distribution pattern to be merged with a basic light distribution pattern emitted (irradiated, illuminated, projected) by a headlamp. The present invention also relates to a vehicle headlamp unit provided with the vehicle lighting device, so as to separately emit the basic light distribution pattern and the spot-type light distribution pattern and merge these patterns.

### 2. Description of the Related Art

The above vehicle lighting device and the vehicle headlamp unit including the lighting device (hereinafter referred to as "vehicle headlamp system") are known in the art. Examples of such a vehicle headlamp system can be found in Japanese Published Unexamined Patent Application 2004-71409 (hereinafter, " first publication") and in Japanese Published Unexamined Patent Application 2004-95480 (hereinafter, " second publication"). The vehicle headlamp systems in the first publication and the second publication have following characteristics. The vehicle headlamp system in the first publication includes a convex-type light emitter and a fan-type light emitter, both including a light emitting diode (LED) as a light source. The convex-type light emitter outwardly emits a spot-type light distribution. The fan-type light emitter outwardly emits a wide light distribution. Merging these light distributions provides a low-beam light distribution including a cut line. Even the vehicle headlamp system in the second publication utilizes the LED as the light source, and includes four types of lighting units. A first lighting unit outwardly emits a cutoff line forming pattern including a horizontal and an oblique cutoff line. A second lighting unit outwardly emits a generally semicircular hot zone forming pattern having a linear upper edge along the horizontal cutoff line. A third lighting unit outwardly emits a generally semicircular hot zone forming pattern having a linear upper edge along the oblique cutoff line. A fourth lighting unit outwardly emits a diffusion region forming pattern. Merging these four patterns provides a predetermined low-beam light distribution pattern.

In the vehicle headlamp system disclosed in the first publication, however, the convex-type light emitter is not provided with any other function but to simply outwardly emit only the spot-type light distribution, and in the vehicle headlamp system disclosed in the second publication, the second lighting unit and third lighting unit simply outwardly emit only the hot zone forming patterns, without any other function. Accordingly, in both the conventional vehicle headlamp systems, no spot-type light distribution or hot zone forming pattern extended in an arbitrary direction can be obtained.

### SUMMARY OF THE INVENTION

It is an object of the present invention to at least solve the problems in the conventional technology.

According to an aspect of the present invention, a vehicle lighting device that emits a spot-type light distribution pattern to be merged with a basic light distribution pattern emitted by a headlamp includes a semiconductor light source including a light emitter; and a lens that emits a light from the light emitter as the spot-type light distribution pattern. The spot-type light distribution pattern is formed of images in a shape of the light emitter extended in an arbitrary direction. The lens is formed by dividing a basic lens into a plurality of parts in a direction to intersect with a direction in which elongation of the shape of the light emitter is intended, disposing a plurality of divided basic lenses with a gap in the direction in which elongation of the shape of the light emitter is intended, providing a joint lens between the divided basic lenses thus disposed, and integrating the divided basic lenses with the joint lens.

According to another aspect of the present invention, a vehicle headlamp unit that respectively emits a basic light distribution pattern and a spot-type light distribution pattern includes a headlamp that outwardly emits the basic light distribution pattern; and at least one vehicle lighting device that outwardly emit the spot-type light distribution pattern. The vehicle lighting device being the above vehicle lighting device. The basic light distribution pattern emitted from the headlamp is merged with the spot-type light distribution pattern emitted from the vehicle lighting device or vehicle lighting devices.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a front view of a first embodiment of a vehicle headlamp system according to the present invention, with an outer lens removed;
Fig. 2 is a front view of a spot lamp unit, likewise;
Fig. 3 is a cross-sectional view along a line III-III of Fig. 2;
Fig. 4 is an explanatory drawing of a lens formed by integrating a plurality of divided basic lenses and a joint lens and images of a light source of a semiconductor light source extended in the left and right direction, obtained by the lens;
Fig. 5 is an explanatory drawing of a light distribution pattern obtained by the spot lamp unit, likewise;
Fig. 6 is a plan view of a basic lens that constitutes a lens, likewise;
Fig. 7 is a front view of the basic lens that constitutes a lens, likewise;
Fig. 8 is a plan view of a basic lens divided into two equal parts and a joint lens, likewise;
Fig. 9 is a front view of the basic lens divided into two equal parts and the joint lens, likewise;
Fig. 10 is a plan view of a basic lens divided into two equal parts, joined by a joint lens, likewise;
Fig. 11 is a front view of the basic lens divided into two equal parts, joined by the joint lens, likewise;
Fig. 12 is an explanatory graph of a passing light distribution pattern obtained by a headlamp unit, shown on a screen, likewise;
Fig. 13 is an explanatory graph of a spot-type light distribution pattern obtained by a spot lamp unit, shown on a screen, likewise;
Fig. 14 is an explanatory graph of an ideal passing light distribution pattern provided by merging the passing light distribution pattern obtained by a headlamp unit of Fig. 12 and the spot-type light distribution pattern obtained by a spot lamp unit of Fig. 13, shown on a screen, likewise;
Fig. 15A and Fig. 15B are explanatory drawings of a light incidence efficiency of an aspherical lens being a mere convex lens;
Fig. 16A and Fig. 16B are explanatory drawings of a light incidence efficiency and an image blur of an aspherical lens larger in the effective diameter than the aspherical lens being a mere convex lens shown in Fig. 15A and Fig. 15B;
Fig. 17A and Fig. 17B are explanatory drawings of a light incidence efficiency and an image blur prevention of a lens according to a first embodiment;
Fig. 18 is an explanatory drawing of a metal mold of a lens, likewise;
Fig. 19 is an explanatory drawing of a modification of a lens, likewise;
Fig. 20A and Fig. 20B are explanatory drawings of a modification of a lens, likewise;
Fig. 21 is an explanatory drawing of a second embodiment of a vehicle headlamp system according to the present invention, showing a basic lens and an image emitted from the basic lens;
Fig. 22 is a plan view of a basic lens divided into three equal parts, likewise;
Fig. 23 is a front view of the basic lens divided into three equal parts, likewise;
Fig. 24 is a front view of a basic lens divided into three equal parts, joined by joint lenses, likewise;
Fig. 25 is a front view of the basic lens divided into three equal parts, joined by the joint lenses;
Fig. 26 is an explanatory drawing of a lens formed by integrating a plurality of divided basic lenses and joint lenses and images of a light emitter of a semiconductor light source extended in the left and right direction, obtained by the lens;
Fig. 27 is a front view of a lens showing a third embodiment of a vehicle headlamp system according to the present invention;
Fig. 28 is an explanatory drawing of a lens formed by integrating a plurality of divided basic lenses and joint lenses and images of a light emitter of a semiconductor light source extended in the left and right direction, obtained by the lens;
Fig. 29 is an explanatory graph of a light distribution pattern obtained by a spot lamp unit;
Fig. 30 is an explanatory graph of a passing light distribution pattern obtained by a head lamp unit, shown on a screen;
Fig. 31 is an explanatory graph of a spot-type light distribution pattern obtained by a spot lamp unit, shown on a screen, likewise;
Fig. 32 is an explanatory graph of an ideal passing light distribution pattern in which the passing light distribution pattern obtained by the headlamp unit of Fig. 30 and the spot-type light distribution pattern obtained by the spot lamp unit of Fig. 31 are merged, on a screen;
Fig. 33 is a front view of a fourth embodiment of a vehicle headlamp system according to the present invention, with an outer lens removed; and
Fig. 34 is an explanatory graph of images emitted from two spot lamp units, likewise.

### DETAILED DESCRIPTION OF THE PREFERRED EMBODIMENTS

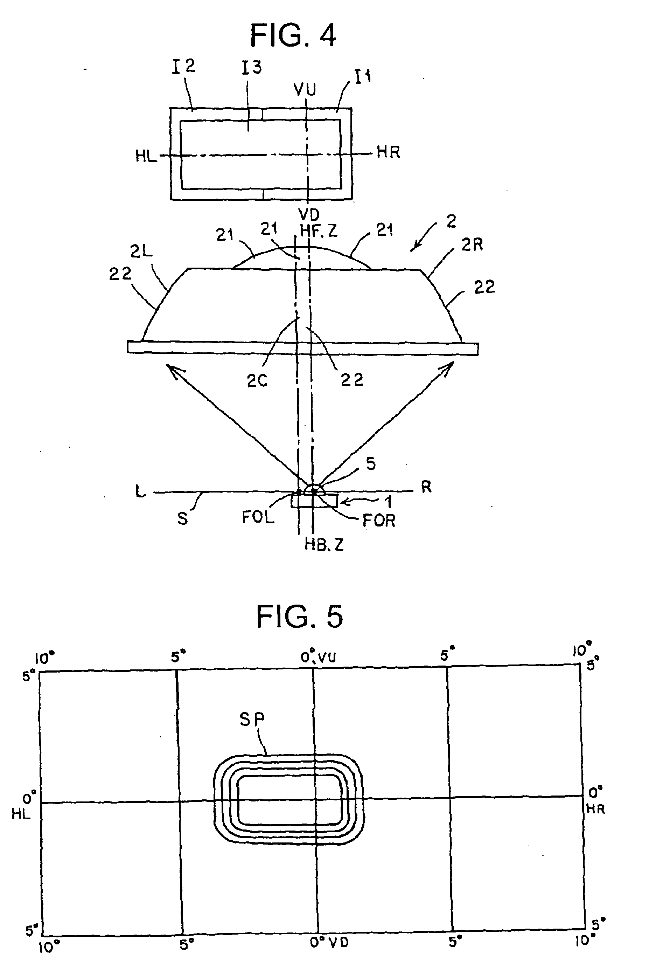

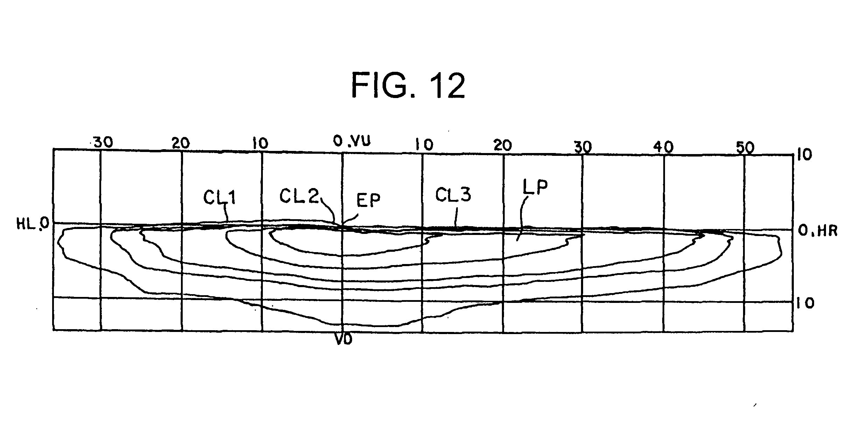

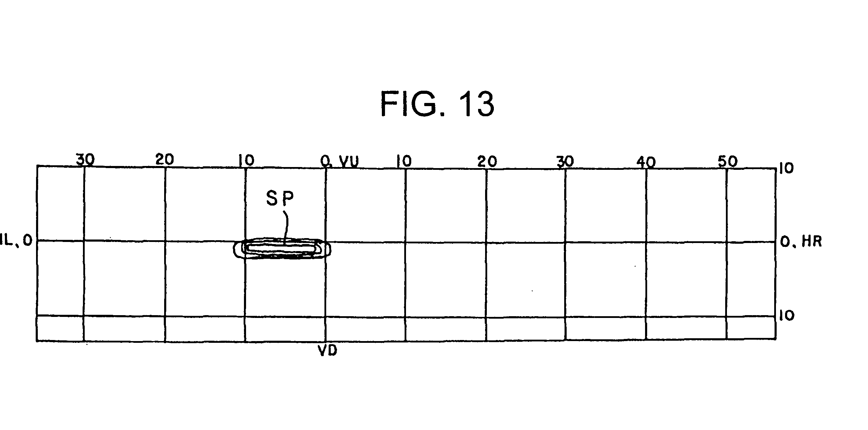

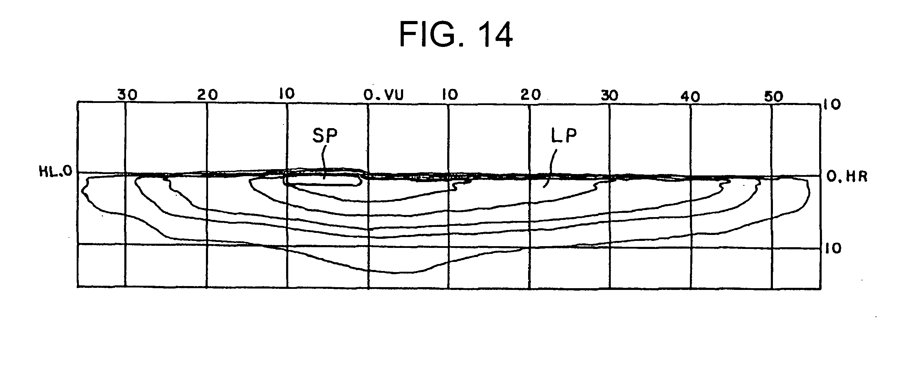

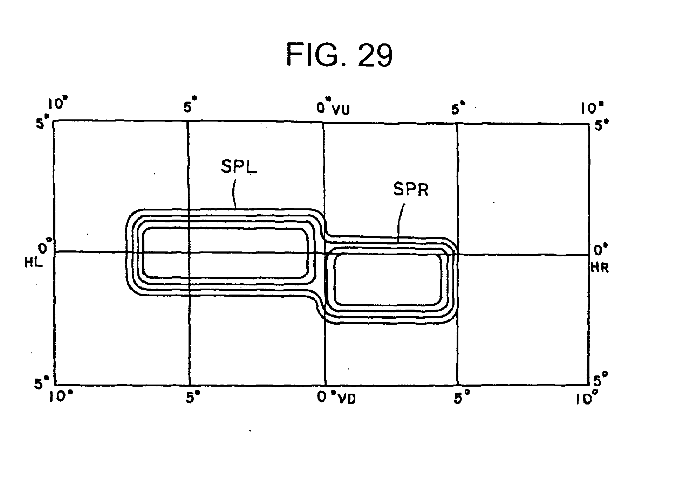

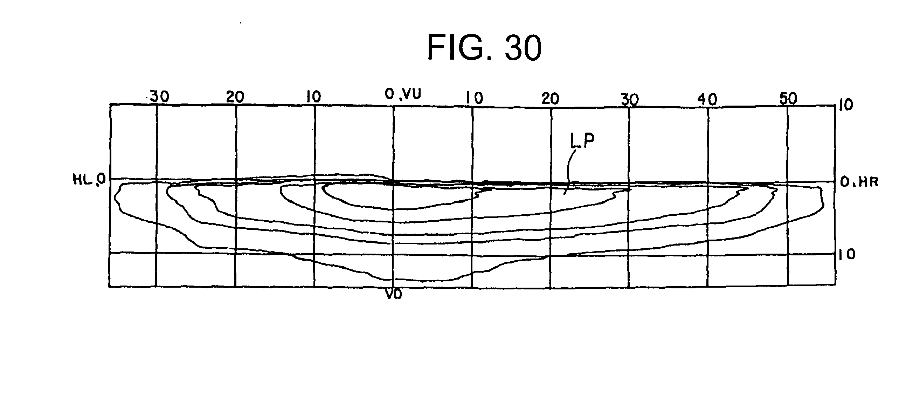

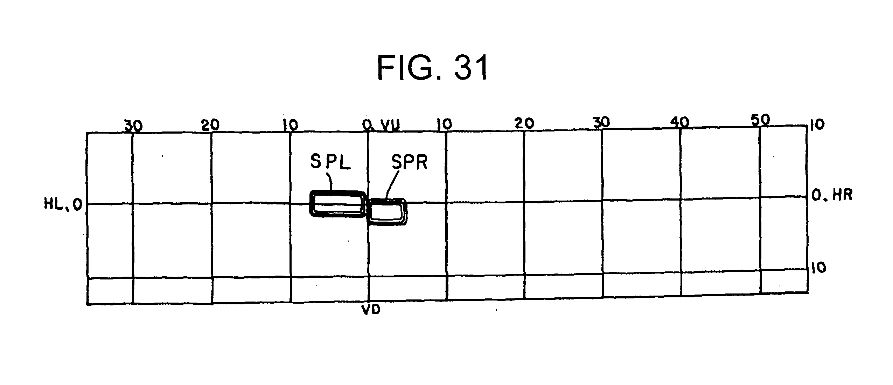

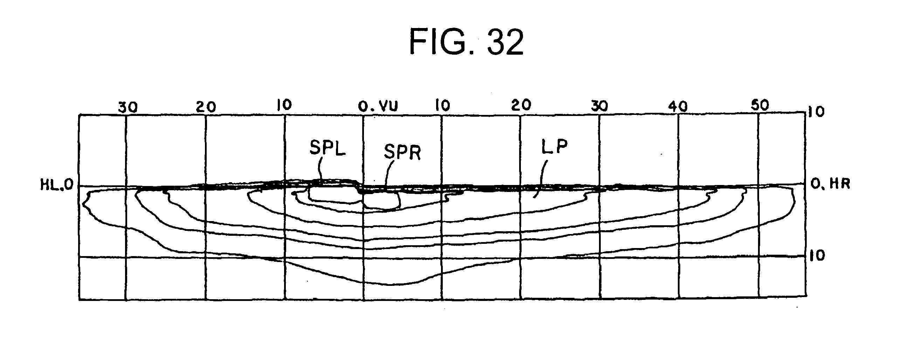

Exemplary embodiments of a vehicle headlamp system according to the present invention will be explained in detail, referring to the accompanying drawings. It is to be noted, however, that the present invention is not limited to the embodiments. The following description of the vehicle headlamp system is based on the assumption that the vehicle (automobile) is to drive on the left side. The structure and light distribution pattern of the vehicle headlamp system for right-side traffic is generally mirror-symmetric. Fig. 5, Fig. 9, Fig. 20, and Fig. 21 are explanatory graphs of iso-intensity curves that show light distribution patterns on a screen obtained by a computer simulation process in a simplified manner, and the innermost iso-intensity curve represents a highest-intensity zone, and the other curves represent intensity zones where the light intensity declines as it goes outward. For example, the innermost iso-intensity curve in Fig. 5 and Fig. 29 delineates a zone of 10000 (candela), and the outer curves respectively delineate zones of 5000 (candela), 2000 (candela), and 300 (candela). In addition, the innermost iso-intensity curves in Fig. 12 and Fig. 30 delineate zones of 10000 (candela), and the outer curves respectively delineate zones of 5000 (candela), 2000 (candela), 1000 (candela), and 300 (candela). Furthermore, the innermost iso-intensity curves in Fig. 13 and Fig. 31 delineate zones of 10000 (candela), and the outer curves respectively delineate zones of 2000 (candela) and 300 (candela). Still furthermore, the innermost iso-intensity curves in Fig. 14 and Fig. 32 delineate zones of 20000 (candela), and the outer curves respectively delineate zones of 10000 (candela), 5000 (candela), 2000 (candela), 1000 (candela), and 300 (candela).

In the present specification and the drawings, a reference symbol "F" denotes a front side from the viewpoint of the driver. A reference symbol "B" denotes a back side from the viewpoint of the driver. A reference symbol "U" denotes an upper side in a forward view from the viewpoint of the driver. A reference symbol "D" denotes a lower side in a forward view from the viewpoint of the driver. A reference symbol "L" denotes a left side in a forward view from the viewpoint of the driver. A reference symbol "R" denotes a right side in a forward view from the viewpoint of the driver. A reference symbol "HL-HR" denotes a horizontal line in a left and right direction (left and right horizontal direction), or a left and right horizontal line on a screen placed 25 meters ahead, onto which the light distribution pattern is projected. A reference symbol "VU-VD" denotes a vertical line in an up and down direction (up and down vertical direction) likewise, or an up and down vertical line on a screen placed 25 meters ahead, onto which the light distribution pattern is projected. A reference symbol "HF-HB" denotes a horizontal line in a front and back direction (a front and back horizontal direction). The terms "left side," "right side," "right and left," "upper side," "lower side," "upper," and "lower" used in the claims are respectively equivalent to "left side," "right side," "right and left," "upper side," "lower side," "upper," and "lower" used herein and in the drawings.

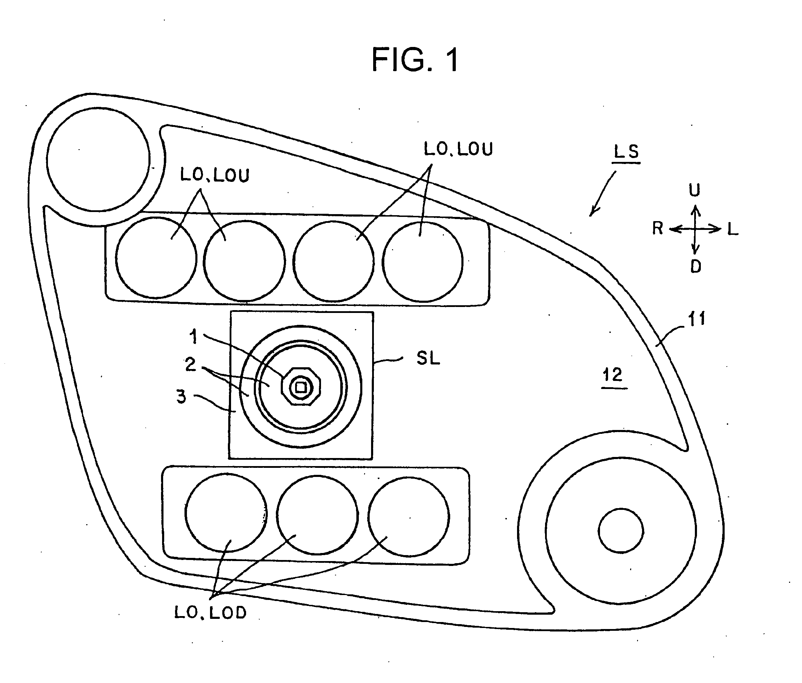

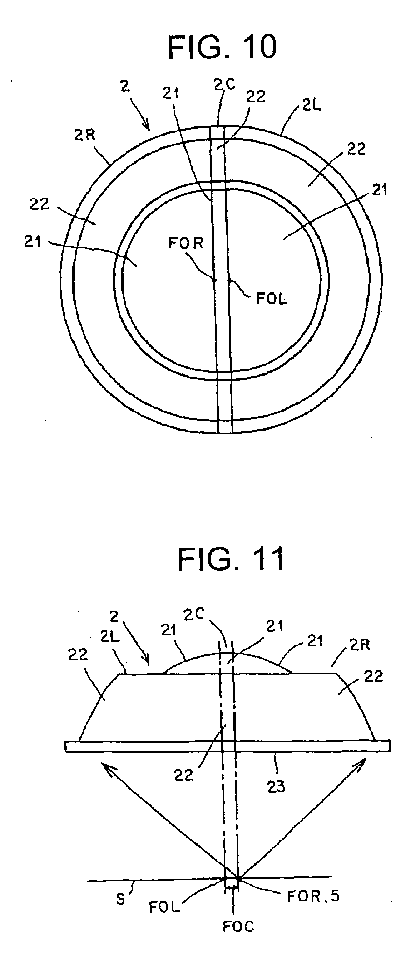

Fig. 1 to Fig. 20B depict a first embodiment of a vehicle headlamp system according to the present invention. In the drawings, a reference symbol "LS" denotes a vehicle headlamp system of the embodiment. The vehicle headlamp system LS is to be mounted on both the left side front and right side front of a vehicle, respectively. The following description covers the vehicle headlamp unit LS to be mounted on the right side front. The vehicle headlamp unit LS to be mounted on the left side front has generally the same structure as that of the right side headlamp unit LS.

The vehicle headlamp system LS includes, as shown in Fig. 1, a headlamp unit L0 serving as a headlamp and a spot lamp unit SL serving as a vehicle lighting device. The headlamp unit L0 and the spot lamp unit SL are respectively accommodated in a light chamber 12 partitioned by a lamp housing 11 and a lamp lens (unillustrated, for example, a transparent outer lens).

The headlamp unit L0 outwardly emits a passing light distribution pattern LP as a basic light distribution pattern. The passing light distribution pattern LP includes, as shown in Fig. 12, an upper horizontal cutoff line CL1 located slightly above the left and right horizontal line HL-HR, an oblique cutoff line CL2, a lower horizontal cutoff line CL3 located slightly below the left and right horizontal line HL-HR, and an elbow point EP that is an intersection of the up and down vertical line VU-VD and the lower horizontal cutoff line CL3. In the passing light distribution pattern LP, an upper left region along the oblique cutoff line CL2 from the elbow point EP serves to secure a long-distance visibility.

The headlamp unit L0 includes, as shown in Fig. 1, an upper headlamp unit group L0U and a lower headlamp unit group L0D located above and below the spot lamp unit SL, respectively. The upper headlamp unit group L0U includes four headlamp units each constituted of a semiconductor light source such as an LED and primarily serves to diffuse a lower region of the passing light distribution pattern LP. On the other hand, the lower headlamp unit group L0D includes three headlamp units, also constituted of a semiconductor light source such as an LED, and primarily serves to emit the cutoff lines CL1, CL2, and CL3 of an upper region of the passing light distribution pattern LP.

The spot lamp unit SL outwardly emits, as shown in Fig. 14, a spot-type light distribution pattern SP at a predetermined position with respect to the passing light distribution pattern LP. The spot-type light distribution pattern SP is, as shown in Fig. 13, a light distribution pattern extended in a left and right direction and is a light distribution pattern that is slender to the left and right with an up and down width of approximately 2 degrees and a left and right width of approximately 12 degrees.

The spot lamp unit SL includes, as shown in Fig. 1 to Fig. 4, a semiconductor light source 1, a lens 2, and a holder 3. The semiconductor light source 1 can be a self-emission semiconductor light source (an LED in the first embodiment) such as an LED or an EL (organic EL). The semiconductor light source 1 includes a substrate 4, a light emitter 5 constituted of a light source chip (semiconductor chip) fixed on a surface of the substrate 4, a light transmitter 6 covering the light emitter 5, and a heat dissipator 7 fixed to the opposite surface of the substrate 4. The light emitter 5 is basically of a minute square, i.e. a rectangular shape having four straight sides (in this example, a square shape), approximately 1 millimeter on a side. One side of the light emitter 5 corresponds to the upper horizontal cutoff line CL1 of the passing light distribution pattern LP.

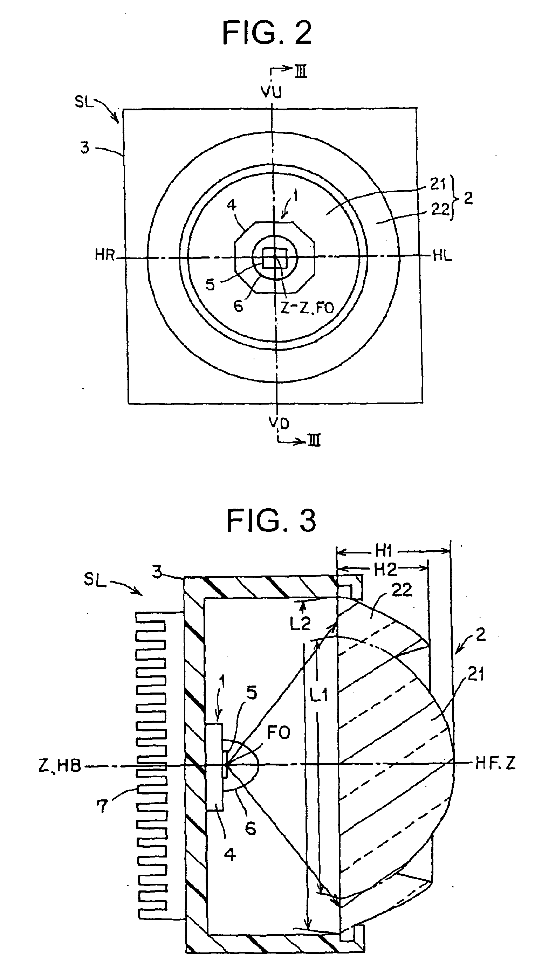

The lens 2 is, as shown in Fig. 3, an aspherical lens (refractive lens, projection lens), in which a plane of incidence (plane into which a light from the light emitter 5 is made incident) forms an aspherical plane and a plane of emergence (plane from which a light from the light emitter 5 is emitted) forms an aspherical convex surface. In addition, the lens 2 is integrally composed of convex-shaped first and second aspherical lens units 21 and 22 having different effective diameters L1 and L2. Namely, the first aspherical lens unit 21 having the smaller effective diameter L1 is enclosed by the second aspherical lens unit 22 with the greater effective diameter L2. Furthermore, the lens 2 shares an optical axis of the first aspherical lens unit 21 and an optical axis of the second aspherical lens unit 22 as an identical optical axis Z-Z. Still furthermore, the lens 2 shares a focal point of the first aspherical lens unit 21 and a focal point of the second aspherical lens unit 22 as an identical focal point F0 on a plane vertical to the optical axis Z-Z. Still furthermore, for the lens 2, a height H1 of the first aspherical lens unit 21 is equivalent to or higher than a height H2 of the second aspherical lens unit 22.

The lens 2 emits, as shown in Fig. 4, a light from the light emitter 5 as the spot-type light distribution pattern SP, which are images I1, I2, and I3 in a shape of the light emitter 5 extended in the left and right direction.

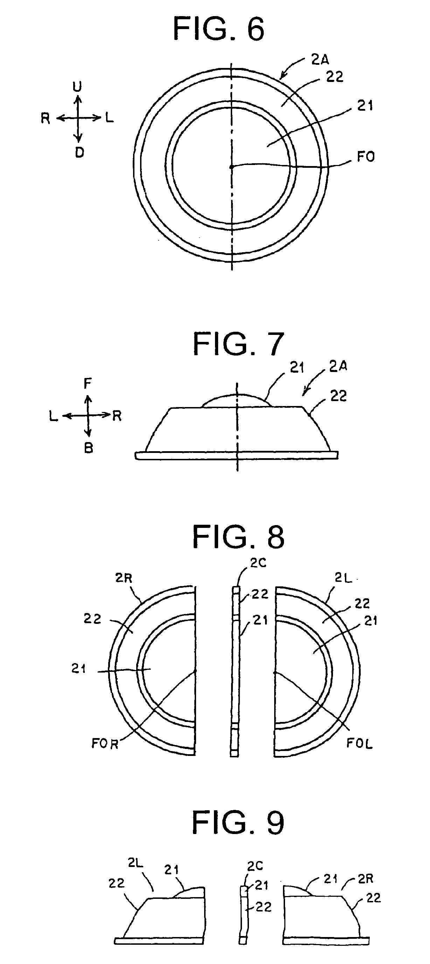

Hereinafter, a configuration of the lens 2 will be explained with reference to Fig. 6 to Fig. 11. First, the lens 2 shown in the vertical cross-sectional view (sectional view in the up and down direction) of Fig. 3 is employed as a basic lens 2A. The basic lens 2A is divided into two, namely, divided into two equal parts (see Fig. 6 and Fig. 7) in a direction almost orthogonal to a direction in which elongation of the shape (images 11, 12, and I3) of the light emitter 5 is intended, i.e. the left and right direction and at the focal point F0 of the basic lens 2A and the zenith of the convex portion.

Next, two divided basic lenses 2L and 2R are disposed with a gap in the left and right direction. Then, a cylindrical joint lens 2C in a shape almost identical to a cross sectional shape of the divided basic lenses 2L and 2R is provided between the two divided basic lenses 2L and 2R thus disposed (see Fig. 8 and Fig. 9). The cylindrical joint lens 2C is an aspherical cylindrical lens having a minute width (for example, 1 to 1.5 millimeters).

The lens 2 is constituted of a lens where focal points F0L and F0R of the two divided basic lenses 2L and 2R have been connected to a focal line (focal point group) F0C of the cylindrical joint lens 2C by integrating the two divided basic lenses 2L and 2R with the cylindrical joint lens 2C (see Fig. 4, Fig. 10, and Fig. 11). Namely, the lens 2 is constituted of a composite lens where three sectors have been integrated.

The focal points F0L and F0R of the two divided basic lenses 2L and 2R and the focal line (focal point group) F0C of the cylindrical joint lens 2C are present on an identical plane S almost vertical to the optical axis Z-Z and are also present on an identical straight line. In addition, the plane of incidence (a plane into which a light from the light emitter 5 is made incident; bottom surface) 23 of the lens 2 constituted of the composite lens shares an identical aspherical plane.

The holder 3 holds the semiconductor light source 1 and lens 2 in a predetermined relative positional relationship. In this example, as shown in Fig. 2 to Fig. 4, the holder 3 holds the semiconductor light source 1 and lens 2 in a relative positional relationship where the light emitter 5 of the semiconductor light source 1 is almost coincident with the focal point F0R of the right divided basic lens 2R of the lens 2. As a result, the images emitted from the lens 2 are distributed as a most condensed image. As such, the spot lamp unit SL is composed of a direct-emission optical system that directly distributes a light from the light emitter 5 of the semiconductor light source 1 by the lens 2.

The vehicle headlamp system LS according to the first embodiment has such a structure as in the above, and the following passages cover the advantageous effect thereof.

When the spot lamp unit SL is turned on, a light from the light emitter 5 of the semiconductor light source 1 of the spot lamp unit SL is, as shown in Fig. 3 to Fig. 5, emitted as a spot-type light distribution pattern SP being the images I1 to I3 having a rectangular shape slender in the left and right direction in a shape of the emitter 5 extended in the left and right direction. As a result, because the vehicle headlamp system LS according to the first embodiment allows obtaining a spot-type light distribution pattern SP extended in the left and right direction, a spot-type light distribution pattern SP suitable for the vehicle headlamp system can be simply and securely obtained.

Namely, by adjusting the spot-type light distribution pattern SP shown in Fig. 5 in the up, down, left, and right directions, a spot-type light distribution pattern SP shown in Fig. 13 can be simply and securely obtained. The spot-type light distribution pattern SP shown in Fig. 13 is merged with a passing light distribution patterns LP shown in Fig. 12, whereby an ideal light distribution pattern (light distribution pattern in which the passing light distribution pattern LP and spot-type light distribution pattern SP are merged) shown in Fig. 14 can be obtained. In the ideal light distribution pattern, the spot-type light distribution pattern SP is arranged at a predetermined position of the passing light distribution pattern LP, namely, a position lower than the upper horizontal cutoff line CL1 and on the left side from the elbow point and oblique cutoff line CL2. Because this position is a part that serves a long-distance visibility, the vehicle headlamp system LS according to the first embodiment can reliably secure long-distance visibility without casting a glare toward drivers and fellow passengers on oncoming vehicles or preceding vehicles, pedestrians and the like, thus contributing to traffic safety.

In particular, because the vehicle headlamp system LS according to the first embodiment has such a structure as in the above, as shown in Fig. 4, Fig. 10, and Fig. 11, the light emitter 5 of the semiconductor light source 1 is arranged at the focal point F0R of the right divided basic lens 2R of the lens 2, while the left divided basic lens 2L of the lens 2 is offset in the left direction by a minute width of the cylindrical joint lens 2C with respect to the right divided basic lens 2R. Namely, the light emitter 5 of the semiconductor light source 1 is offset in the right direction by the minute width of the cylindrical joint lens 2C with respect to the focal point F0L of the left divided basic lens 2L. As a result, in the vehicle headlamp system LS according to the first embodiment, as shown in Fig. 4, from the right divided basic lens 2R, an image I1 (image almost equivalent in size and shape to an image (unillustrated) emitted from the basic lens 2 and one-half the amount of light (intensity)) is emitted. On the other hand, from the left divided basic lens 2L, an image I2 (image almost equivalent in size and shape to an image (unillustrated) emitted from the basic lens and one-half the amount of light (intensity), having a shape of an almost exact replica of the image I1) is emitted so as to connect to the left side of the image I1 from the right divided basic lens 2R. Furthermore, from the cylindrical joint lens 2C, an image I3 that lies across the images I1 and I2 from the right divided basic lens and left divided basic lens 2R and 2L connected to the left and right is emitted. The image I3 from the cylindrical joint lens 2C compensates for the connected images I1 and I2 replicated and dispersed as two images. Still furthermore, because the focal points F0L and F0R of the two divided basic lenses 2L and 2R and the focal line (focal point group) F0C of the cylindrical joint lens 2C are present on an identical plane S almost vertical to the optical axis Z-Z and are also present on an identical straight line, the images I1 and I2 connected to the left and right and the image I3 across those images never lose shape. Thereby, the vehicle headlamp system LS according to the first embodiment allows obtaining a spot-type light distribution pattern SP extended in the left and right direction, and an upper side of the spot-type light distribution pattern SP can be disposed along the upper horizontal cutoff line CL1.

Moreover, the vehicle headlamp system LS according to the first embodiment allows obtaining a spot-type light distribution pattern SP extended in the left and right direction by the single spot lamp unit SL by using a high-power light emitter as the light emitter 5 of the semiconductor light source 1. Accordingly, in the vehicle headlamp system LS according to the first embodiment, the number of components can be reduced to lower the manufacturing cost. Moreover, with the single spot lamp unit SL, storage space can be considerably reduced, and the number of components of a swivel mechanism or a sliding mechanism accompanied with the spot lamp unit SL can be considerably reduced, whereby the degree of freedom of design is increased.

In particular, the vehicle headlamp system LS includes the lens 2 that integrally includes the convex-shaped first and second aspherical lens units 21 and 22 having different effective diameters L1 and L2, namely, the lens 2 formed by enclosing the first aspherical lens unit 21 with the second aspherical lens unit 22 having the greater effective diameter L2, namely, a compound lens. Therefore, because the vehicle headlamp system LS can allow a light from the light emitter 5 of the semiconductor light source 1 to be efficiently made incident by use of the lens 2, a high-intensity (high-density) image (light distribution pattern) can be obtained, and moreover, a sharp outline can be obtained around the image by preventing an image blur owing to a spherical aberration and a chromatic aberration.

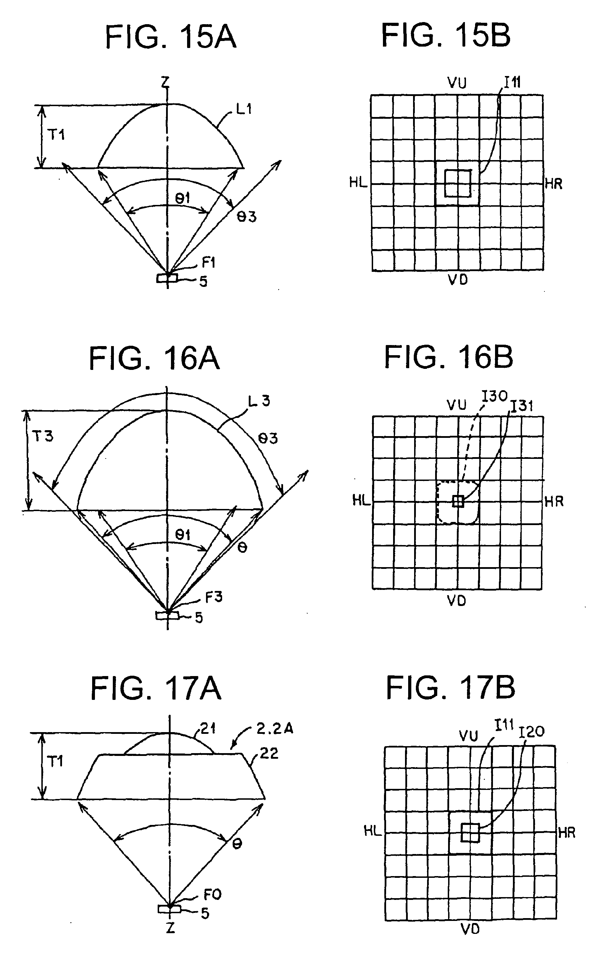

The advantageous effect will be explained with reference to Fig. 15A to Fig. 17B. First, in the aspherical lens L1 being a mere convex lens shown in Fig. 15A, because a maximum incidence angle θ1 that projects an appropriate-sized image I11 (see Fig. 14B) at an appropriate thickness T1 is smaller than a radiation angle θ3 of a light from the single light emitter 5 of the semiconductor light source 1 (θ1 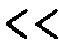 θ3), light incidence efficiency of the aspherical lens L1 is low. A reference symbol F1 in Fig. 14A is a focal point of the aspherical lens L1, and the light emitter 5 of the semiconductor light source 1 is positioned at the focal point F1.

Here, in order to improve the light incidence efficiency, an aspherical lens L3 (see Fig. 16A) whose distance from a focal point F3 to a plane of incidence is the same as that of the aspherical lens L1 and whose effective diameter is greater than the aspherical lens L1 is considered. Then, a maximum incident angle θ of the aspherical lens L3 becomes almost the same as the radiation angle θ3 of a light from the light emitter 5 of the semiconductor light source 1, whereby a high light incidence efficiency can be obtained. However, a thickness T3 of the aspherical lens L3 increases greater than the thickness T1 of the aspherical lens L1, is therefore unrealistic in molding, and leads to an image I31 (see Fig. 16B) smaller in size than the appropriate-sized image I11 (see Fig. 15B) that achieves an intended light distribution pattern. Moreover, a spherical aberration of the aspherical lens L3 is generated to cause an image blur 130 (see dotted line in Fig. 16B). Therefore, there is a problem in distributing a side of the image along a cutoff line of the basic distribution pattern. Here, the reference symbol F3 in Fig. 16A denotes a focal point of the aspherical lens L3, and the light emitter 5 of the semiconductor light source 1 is located at the focal point F3.

Therefore, in the first embodiment, the lens 2 (basic lens 2A) integrated by integrating the aspherical lens L3 (second aspherical lens unit 22) so as to enclose the aspherical lens L1 (first aspherical lens unit 21) is used. Thereby, as shown in Fig. 17A, despite maintaining the appropriate-sized image I11 (see Fig. 17B) at the appropriate thickness T1, the maximum incidence angle θ of the lens 2 can be made almost equal to the maximum incidence angle θ of the aspherical lens L3, in other words, light incidence efficiency can be improved. On the other hand, an image 120 (see Fig. 17B) of a size by an increment (equivalent to θ-θ1) with a spherical aberration can be kept within the appropriate-sized image I11 (see Fig. 17B) of the aspherical lens L1 (first aspherical lens unit 21). As a result, as shown in Fig. 16B, while the outline of the image I11 remains sharp, a highly-efficient light distribution such that the insides of the images I11 and 120 reach a high intensity (high density) can be obtained. Thereby, as mentioned above, high-intensity (high-density) spot-type light distribution patterns SP, SPL, and SPR extended in the left and right direction can be obtained at a high efficiency.

In addition, in the first embodiment of the vehicle headlamp system LS, a plane of incidence 23 of the lens 2 constituted of a composite lens is shared by an identical aspherical plane. Namely, a plane of incidence of the first aspherical lens unit 21 and a plane of incidence of the second aspherical lens unit 22 are shared by an identical aspherical plane. Accordingly, in the vehicle headlamp system LS, most of the light made incident into the plane of incidence 23 of the lens 2 is distributed from aspherical convex surfaces, which are planes of emergence of the first aspherical lens unit 21 and second aspherical lens unit 22, as intended. Namely, the light made incident into the lens 2 is distributed with little light loss.

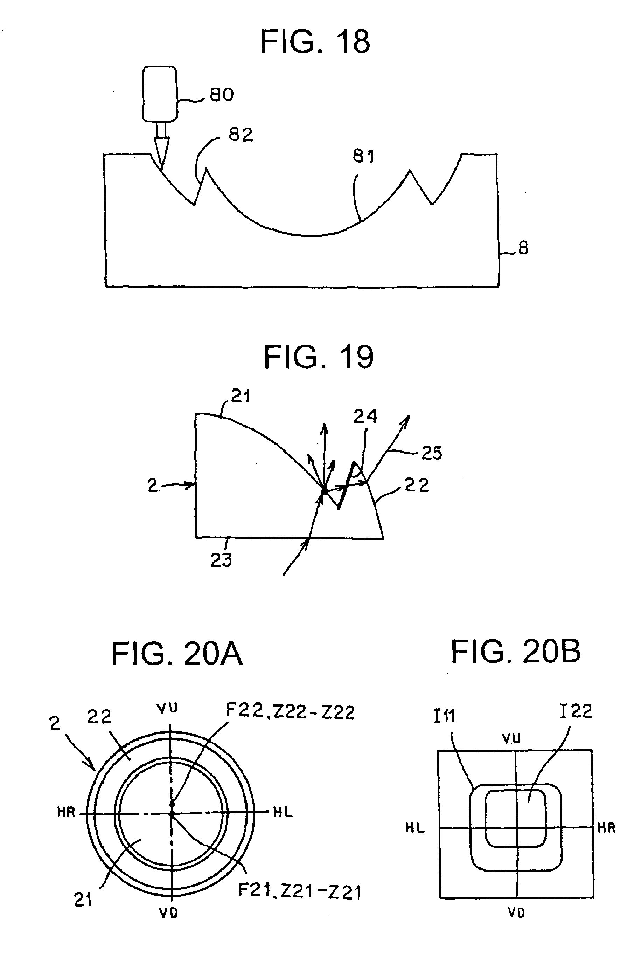

Furthermore, in the first embodiment of the vehicle headlamp system LS uses the lens 2 where the height H1 of the first aspherical lens unit 21 is equivalent to or higher than the height H2 of the second aspherical lens unit 22, namely, the lens 2 where a highest point of the convex surface (convex portion) of the second aspherical lens unit 22 is lower than a highest point of the convex surface (convex portion) of the first aspherical lens unit 21. Therefore, in a first embodiment for the vehicle headlamp system LS, as shown in Fig. 18, in a metal mold 8 of the lens 2, a deepest point of a concave portion 82 to mold the second aspherical lens unit 22 is shallower than a deepest point of a concave portion 81 to mold the first aspherical lens unit 21. As a result, in the first embodiment of the vehicle headlamp system LS, when processing the metal mold 8 of the lens 2, a shelter for an NC machining cutter chuck 80 can be secured, which allows a stable high-precision processing. Namely, when the deepest point of the concave portion 82 to mold the second aspherical lens unit 22 is made deeper than the deepest point of the concave portion 81 to mold the first aspherical lens unit 21, the angle of a valley portion of the concave portion 82 to mold the second aspherical lens unit 22 is reduced to make side walls of the valley portion almost vertical, so that the shelter for the NC machining cutter chuck 80 cannot be secured.

Here, lights that are emitted from the plane of emergence being the convex surface of the first aspherical lens unit 21 and the plane of emergence being the convex surface of the second aspherical lens unit 22 involve a scattered light at the planes of emergence. In particular, a scattered light that is generated, of the plane of emergence being the convex surface of the first aspherical lens unit 21, as shown in Fig. 19, near a junction with the second aspherical lens unit 22 can be again made incident from a boundary wall surface (a plane between the convex surface of the first aspherical lens unit 21 and convex surface of the second aspherical lens unit 22, logically, a plane from which a positive refracted light made incident from the plane of incidence 23 is not emitted outward) 24 of the second aspherical lens unit 22 to become a stray light 25 when emitted from the plane of emergence being the convex surface of the second aspherical lens unit 22. Therefore, in the first embodiment of the vehicle headlamp system LS, the problem of a stray light can be solved by applying a surface treatment (see the thick solid line in Fig. 12) to lower light transmittance, for example, a grain finish, frosting, or painting to the boundary wall surface 24 of the second aspherical lens unit 22 of the lens 22, and moreover, a new external appearance can be obtained.

In addition, in the first embodiment for the vehicle headlamp system LS, as shown in Fig. 20A, in the lens 2, while an axis Z22-Z22 that passes through a focal point F22 of the second aspherical lens unit 22 is offset upward in the vertical direction with respect to an axis Z21-Z21 that passes through a focal point F21 of the first aspherical lens unit 21, the first aspherical lens unit 21 is integrated with the second aspherical lens unit 22. Such a configuration allows the vehicle headlamp system LS according to the first embodiment, when the light emitter 5 of the semiconductor light source 1 positioned at a focal point F21 of the first aspherical lens unit 21 or near the same, to offset an image I22 (see Fig. 20B) obtained by the second aspherical lens unit 22 upward in the vertical direction with respect to an image I11 (see Fig. 20B) obtained by the first aspherical lens unit 21. Namely, in the images I21 and I22 emitted from the lens 2, a high-density zone can be shifted upward in the vertical direction, i.e. to the cutoff line side of a basic light distribution pattern, therefore, long-distance visibility can further be improved.

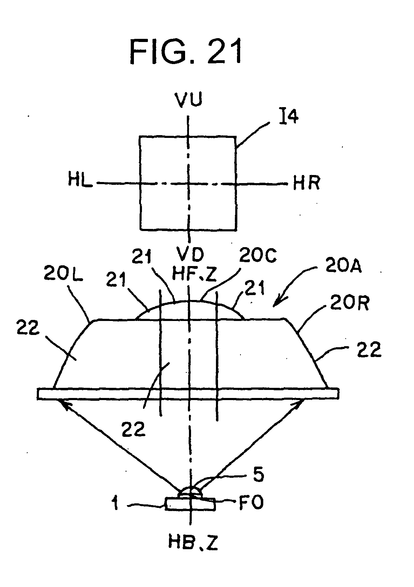

Fig. 21 to Fig. 26 depict a second embodiment of a vehicle headlamp system according to the present invention. In the drawings, the symbols identical to those of Fig. 1 to Fig. 20B denote identical components.

For the vehicle headlamp system according to the second embodiment, a lens 20 different from the lens 2 used for the vehicle headlamp system LS in the first embodiment is used. Namely, for the lens 20 used for the vehicle headlamp system in the second embodiment, a basic lens 20A (basic lens almost the same as the basic lens 2A of the lens 2 according to the first embodiment 1) is divided into three (see Fig. 21) of a center portion 20C having a focal point F0 of the basic lens 20A and both end portions 20L and 20L in a direction almost orthogonal to a direction in which elongation of the shape (images I1, I2, and I3) of the light emitter 5 is intended, i.e. the left and light direction.

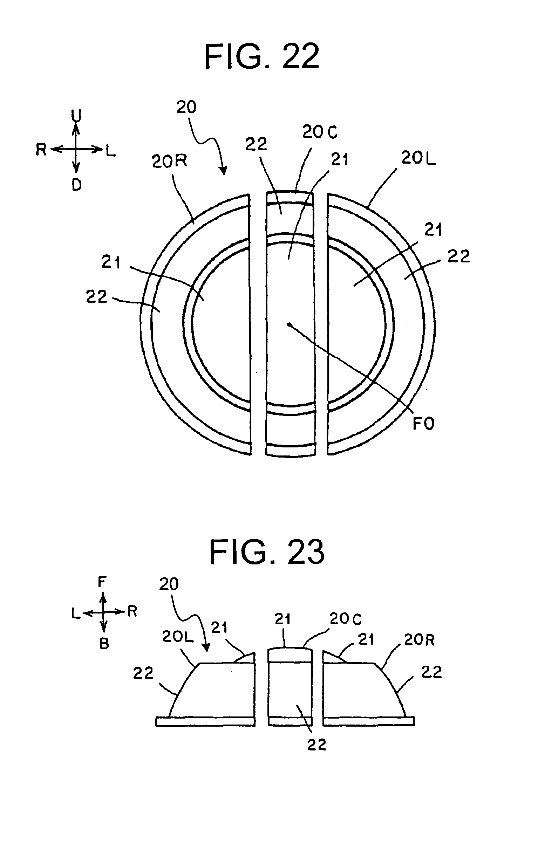

Next, the three divided basic lenses 20L, 20C, and 20R are disposed with gaps in the left and right direction (see Fig. 22 and Fig. 23). For example, the lens left end portion 20L is disposed with a gap in the left direction with respect to the lens center portion 20C, and the lens right end portion 20R, with a gap in the right direction.

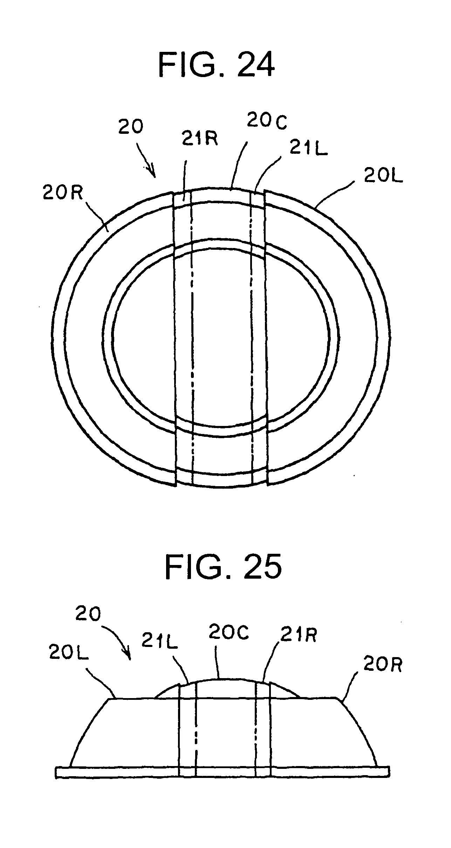

Then, joint lenses 21L and 21R are provided among the three divided basic lenses 20L, 20C, and 20R thus disposed, i.e. between the lens center portion 20C and lens left end portion 20L and between the lens center portion 20C and lens right end portion 20R (see Fig. 24 and Fig. 25). The joint lenses 21L and 21R are lenses in a shape extended from both left and right dividing surfaces of the lens center portion 20C along the basic lens 20A. The joint lenses 21L and 21R may be cylindrical lenses formed by sliding the left and right dividing surfaces of the lens center portion 20C to the left and right as they are.

As such, the lens 20 according to the second embodiment is constituted of a lens where the three divided basic lenses (lens center portion 20C, lens left end portion 20L, and lens right end portion 20R) have been integrated with the two joint lenses 21L and 21R.

The vehicle headlamp system LS according to the second embodiment has such a structure as in the above, and the following passages cover the advantageous effect thereof.

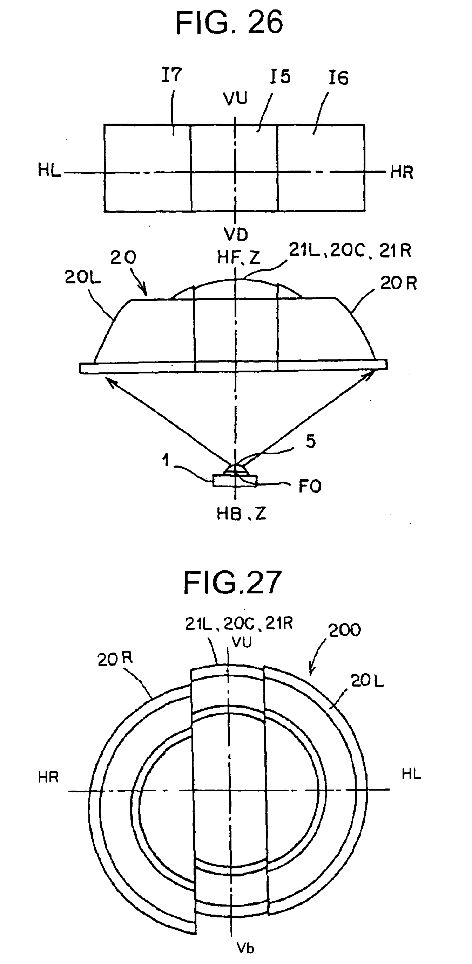

When the spot lamp unit SL is turned on, a light from the light emitter 5 of the semiconductor light source 1 of the spot lamp unit SL is emitted, as shown in Fig. 26, as a spot-type light distribution pattern SP being images I5 to I7 having a rectangular shape slender in the left and right direction in a shape of the emitter 5 extended in the left and right direction. As a result, because the vehicle headlamp system LS according to the second embodiment allows obtaining, similar to the vehicle headlamp system LS according to the first embodiment, a spot-type light distribution pattern SP extended in the left and right direction, a spot-type light distribution pattern SP suitable for the vehicle headlamp system can be simply and securely obtained. Namely, by adjusting the spot-type light distribution pattern SP shown in Fig. 5 in the up, down, left, and right directions, a spot-type light distribution pattern SP shown in Fig. 13 can be simply and securely obtained.

In particular, as shown in Fig. 26, from the lens center portion 20C and left and right joint lenses 20L and 21R of the lens 20, an image I5 (almost equivalent in size and shape to an image I4 (see Fig. 21) emitted from the basic lens 20A and approximately one-third the amount of light (intensity) is emitted. In addition, from the lens left end portion 20L of the lens 20, an image I6 (image almost equivalent in size and shape to the image I4 (see Fig. 21) emitted from the basic lens 20A and approximately one-third the amount of light (intensity)) is emitted so as to connect to the right side of the image I5 from the lens center portion 20C and left and right joint lenses 21L and 21R. On the other hand, from the lens right end portion 20R of the lens 20, an image I7 (image almost equivalent in size and shape to the image I4 (see Fig. 21) emitted from the basic lens 20A and approximately one-third the amount of light (intensity)) is emitted so as to connect to the left side of the image I5 from the lens center portion 20C and left and right joint lenses 21L and 21R. Thereby, the vehicle headlamp system LS according to the second embodiment allows obtaining, similar to the vehicle headlamp system LS according to the first embodiment, a spot-type light distribution pattern SP extended in the left and right direction, and an upper side of the spot-type light distribution pattern SP can be disposed along the upper horizontal cutoff line CL1 of the passing light distribution pattern LP.

The vehicle headlamp system according to the second embodiment can achieve almost the same advantageous effect as that of the vehicle headlamp system LS according to the first embodiment. The images I5, I6, and I7 shown in Fig. 26 are images when the lens center portion 20C and left and right joint lenses 21L and 21R, lens right end portion 20R, and lens left end portion 20L have been divided into three equal parts at an equivalent solid angle.

Fig. 27 to Fig. 32 depict a third embodiment of a vehicle headlamp system according to the present invention. In the drawings, the symbols identical to those of Fig. 1 to Fig. 26 denote identical components.

For the vehicle headlamp system according to the third embodiment, a lens 200 almost the same as the lens 20 used for the vehicle headlamp system LS according to the second embodiment is used. Namely, for the lens 200 used for the vehicle headlamp system according to the third embodiment is a lens where, as shown in Fig. 27, the left part (lens center portion 20C, left and right joint lenses 21L and 21R, and lens left end portion 20L) and right part (lens right end portion 20R) of the lens 2 used in the second embodiment have been alternately displaced in the vertical direction. Namely, a right part of the lens 200 is displaced to the lower side with respect to a left part of the lens 200.

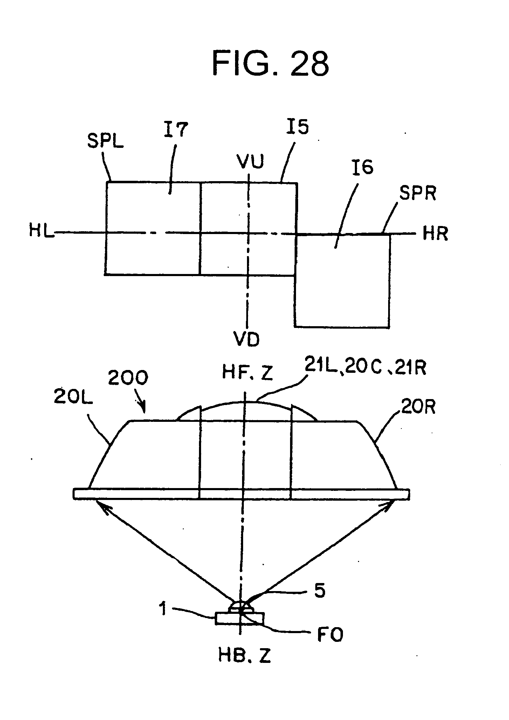

Because the vehicle headlamp system according to the third embodiment has such a structure as in the above, when the spot lamp unit SL is turned on, a light from the light emitter 5 of the semiconductor light source 1 of the spot lamp unit SL is emitted, as shown in Fig. 28 and Fig. 29, as spot-type light distribution patterns SPL and SPR being images I5 to I7 having a rectangular shape slender in the left and right direction in a shape of the emitter 5 extended in the left and right direction. As the images, the image I6 corresponding to the right part of the lens 200 and the images I5 and I7 corresponding to the right part of the lens 200 are displaced up and down from each other, and consequently, as the spot-type light distribution patterns, the right spot-type distribution pattern SPR corresponding to the right image I6 and the left spot-type light distribution pattern SPL corresponding to the left images I5 and I7 are displaced up and down from each other.

Then, by adjusting the spot-type light distribution patterns SPL and SPR shown in Fig. 29 in the up, down, left, and right directions, spot-type light distribution patterns SPL and SPR shown in Fig. 31 where the left and right parts have been slightly displaced up and down from each other can be simply and securely obtained. The spot-type light distribution patterns SPL and SPR are merged with the passing light distribution pattern LP shown in Fig. 30, whereby an ideal light distribution pattern (light distribution pattern in which the passing light distribution pattern LP and spot-type light distribution patterns SPL and SPR are merged) shown in Fig. 32 can be obtained. In the ideal light distribution pattern, the spot-type light distribution patterns SPL and SPR are arranged at predetermined positions of the passing light distribution pattern LP, namely, the left part SPL is arranged at a position lower than the upper horizontal cutoff line CL1 and on the left side from the elbow point EP and oblique cutoff line CL2, and the right part SPR is arranged lower than the lower horizontal cutoff line CL3. Because this position is a part that serves a long-distance visibility, the vehicle headlamp system according to the second embodiment can reliably secure long-distance visibility without casting a glare toward drivers and fellow passengers on oncoming vehicles or preceding vehicles, pedestrians and the like, thus contributing to traffic safety. Moreover, by slightly raising the spot-type light distribution patterns SPL and SPR to the upper side, a motorway light distribution pattern (unillustrated, a light distribution pattern that is high in the possibility that the vehicle encounters a preceding vehicle or an oncoming vehicle and is appropriate for high-speed driving) can be obtained.

The vehicle headlamp system according to the third embodiment can achieve almost the same advantageous effects as that of the vehicle headlamp systems LS according to the first and second embodiments.

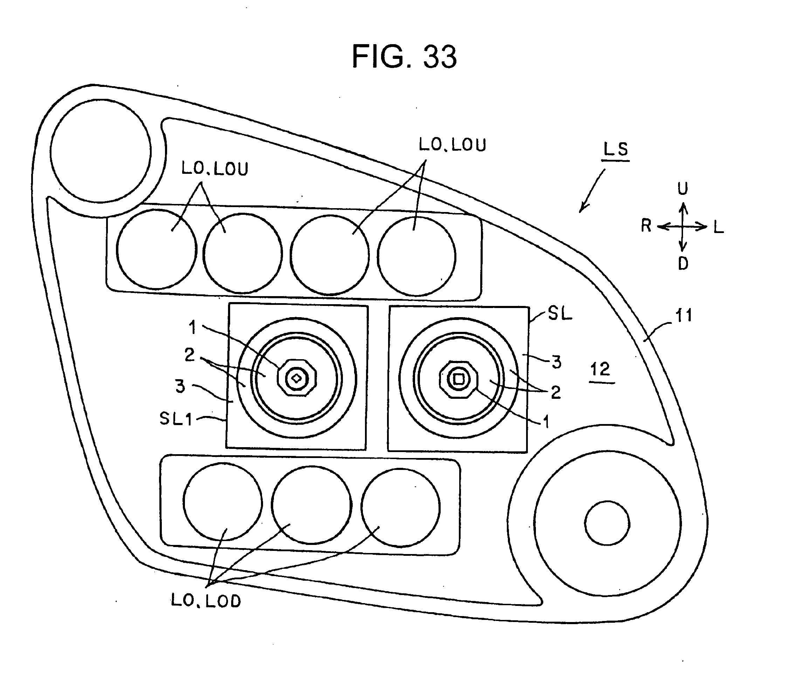

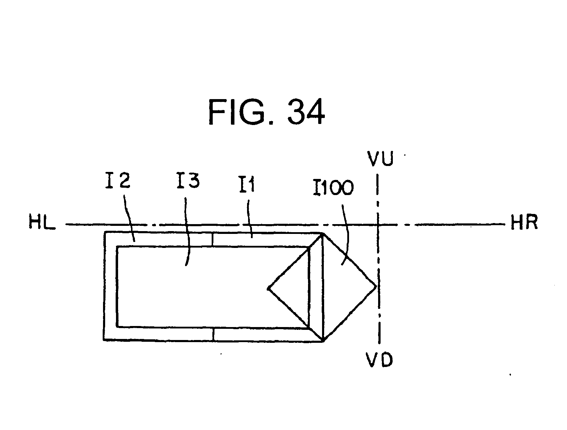

Fig. 33 and Fig. 34 depict a fourth embodiment of a vehicle headlamp system according to the present invention. In the drawings, the symbols identical to those of Fig. 1 to Fig. 32 denote identical components.

For the vehicle headlamp system according to the fourth embodiment, in the vehicle headlamp systems LS according to the first, second, and third embodiments, a new spot lamp unit SL1 is equipped to the spot lamp unit SL. The new spot lamp unit SL1 uses a light emitter having a diamond shape.

Because the vehicle headlamp system according to the fourth embodiment has such a structure as in the above, the images I1, I2, and I3 are obtained by the spot lamp unit SL, and an image I100 having a diamond shape is obtained by the new spot lamp unit SL1. As a result, the vehicle headlamp system according to the fourth embodiment can obtain the emitted images I100, I1, I2, and I3 in which an upper right oblique side of the image I100 is aligned with the oblique cutoff line CL2 of the passing light distribution pattern LP and upper sides of the images I1, I2, and I3 are aligned with the upper horizontal cutoff line of the passing light distribution pattern LP.

In the first, second, third, and fourth embodiments, the headlamp unit L0 includes a plurality of lamp units, each with an LED as the light source. According to the present invention, however, the headlamp unit may be constituted of a single or a plurality of lamp units including a discharge light, a halogen bulb, an incandescent bulb, or the like as the light source.

Also, in the first, second, third, and fourth embodiments, the lens 2 integrally composed of the two convex-shaped first and second aspherical lens units 21 and 22 having different effective diameters L1 and L2 is used. However, in the present embodiment, a lens (unillustrated) that is a normal convex lens constituted of a convex-shaped aspherical lens with a single effective diameter may be used.

Furthermore, in the first embodiment, the basic lens 2A is divided into two equal parts, and in the second and third embodiments, the basic lens 20A is divided into three and is joined by the joint lenses 2C, 21L, and 21R. According to the present invention, however, the basic lens 2A according to the first embodiment may be divided into three or more, and the basic lens 20A according to the second and third embodiments, into four or more, and be joined by joint lenses. In this case, although the images slightly lose shape in contours, the spot-type light distribution pattern can be extended in an arbitrary direction.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle lighting device that emits a spot-type light distribution pattern to be merged with a basic light distribution pattern emitted by a headlamp, comprising:
a semiconductor light source (1) including a light emitter (5); and
a lens (2) that emits a light from the light emitter (5) as the spot-type light distribution pattern, wherein
the spot-type light distribution pattern is formed of images in a shape of the light emitter (5) extended in an arbitrary direction, and
the lens (2) is formed by
dividing a basic lens into a plurality of parts in a direction to intersect with a direction in which elongation of the shape of the light emitter is intended,
disposing a plurality of divided basic lenses with a gap in the direction in which elongation of the shape of the light emitter is intended,
providing a joint lens between the divided basic lenses thus disposed, and
integrating the divided basic lenses with the joint lens.

2. The vehicle lighting device according to claim 1, wherein the lens (2) is constituted of a lens formed by
dividing a basic lens into two in a direction almost orthogonal to a direction in which elongation of the shape of the light emitter is intended and at a focal point of the basic lens,
disposing two divided basic lenses with a gap in the direction in which elongation of the shape of the light emitter is intended,
providing a cylindrical joint lens in a shape almost identical to a cross sectional shape of the divided basic lenses between the divided basic lenses thus disposed, and
integrating the two divided basic lenses with the cylindrical joint lens to connect focal points of the two divided basic lenses to a focal line of the cylindrical joint lens.

3. The vehicle lighting device according to claim 1, wherein the lens (2) is constituted of a lens formed by
dividing a basic lens into three of a center portion having a focal point of the basic lens and both end portions in a direction almost orthogonal to a direction in which elongation of the shape of the light emitter is intended and at a focal point of the basic lens,
disposing three divided basic lenses with gaps in the direction in which elongation of the shape of the light emitter is intended,
providing joint lenses in a shape extended from both dividing surfaces of the center portion along the basic lens among the divided basic lenses thus disposed, and
integrating the three divided basic lenses with the two joint lens.

4. The vehicle lighting device according to claim 1, wherein
of the lens (2) formed by integrating divided basic lenses with the joint lens, a plane of incidence into which a light from the light emitter is made incident shares an identical plane.

5. The vehicle lighting device according to claim 1, wherein
the lens (2) integrally includes convex-shaped first aspherical lens unit (21) having a first effective diameter and second aspherical lens unit (22) having a second effective diameter, wherein the first effective diameter is smaller than the second effective diameter, and
the first aspherical lens unit (21) is enclosed by the second aspherical lens unit (22).

6. The vehicle lighting device according to claim 1, wherein
the lens (2) integrally includes convex-shaped first aspherical lens unit (21) having a first effective diameter and second aspherical lens unit (22) having a second effective diameter, wherein the first effective diameter is smaller than the second effective diameter, and
a height of the first aspherical lens unit (21) is any one of substantially equal and more than that of the second aspherical lens unit (22).

7. The vehicle lighting device according to claim 1, wherein
the lens (2) integrally includes convex-shaped first aspherical lens unit (21) having a first effective diameter and second aspherical lens unit (22) having a second effective diameter, and
a surface treatment to lower light transmittance is applied to a boundary surface between a plane of emergence of the first aspherical lens unit (21) from which a light from the light emitter (5) is emitted and a plane of emergence of the second aspherical lens unit (22) from which a light from the light emitter (5) is emitted.

8. The vehicle lighting device according to claim 1, wherein
the lens (2) integrally includes convex-shaped first aspherical lens unit (21) having a first effective diameter and second aspherical lens unit (22) having a second effective diameter, and
an optical axis that passes through a focal point of the second aspherical lens unit (22) is offset upward with respect to an optical axis that passes through a focal point of the first aspherical lens unit (21).

9. The vehicle lighting device according to claim 1, wherein
the basic light distribution pattern is a light distribution pattern having an upper horizontal cutoff line, an oblique cutoff line, and a lower horizontal cutoff line,
the light emitter (5) has a rectangular shape having four straight sides,
the lens (2) emits a light from the light emitter (5) as the spot-type light distribution pattern positioned lower than the upper horizontal cutoff line and on the left side or right side from an intersection of the oblique cutoff line and the lower horizontal cutoff line, being images having a rectangular shape in the rectangular shape of the light emitter (5) extended to the left and right along the upper horizontal cutoff line.

10. The vehicle lighting device according to claim 1, wherein
a left part and a right part of the lens (2) are alternately displaced in the vertical direction, and
of the spot-type light distribution pattern, a left part and a right part are alternately displaced in the vertical direction.

11. The vehicle lighting device according to claim 1, wherein
the basic light distribution pattern is a light distribution pattern having an upper horizontal cutoff line, an oblique cutoff line, and a lower horizontal cutoff line,
the light emitter (5) has a rectangular shape having four straight sides,
a left part and a right part of the lens (2) are alternately displaced in the vertical direction,
of the spot-type light distribution pattern, a left part and a right part are alternately displaced in the vertical direction,
one of the left part and right part is positioned lower than the upper horizontal cutoff line and on the left side or right side from an intersection of the oblique cutoff line and the lower horizontal cutoff line, and
the other is positioned lower than the lower horizontal cutoff line.

12. The vehicle lighting device according to claim 1, wherein the light emitter (5) is a high power light source.

13. A vehicle headlamp unit that respectively emits a basic light distribution pattern and a spot-type light distribution pattern, comprising:
a headlamp that outwardly emits the basic light distribution pattern; and
at least one vehicle lighting device that outwardly emits the spot-type light distribution pattern, wherein
the vehicle lighting device is the vehicle lighting device according to any one of claims 1 to 12, and
the basic light distribution pattern emitted from the headlamp is merged with the spot-type light distribution pattern emitted from the vehicle lighting device or vehicle lighting devices.
